# EUROPEAN PATENT APPLICATION

(11) **EP 2 624 117 A2**
(43) Date of publication of application: **07.08.2013**
(21) Application number: 13152281.5
(22) Date of filing: 22.01.2013
(51) Int. Cl.: G06F 3/048, G06T 15/00, G06T 19/00

(54) **System and method providing a viewable three dimensional display cursor**

(30) Priority: 06.02.2012 US 201213366802
(71) Applicant: Honeywell International Inc., Morristown, NJ 07962-2245 (US)
(72) Inventor: De Mers, Robert E., Morristown, NJ New Jersey 07962-2245 (US)
(74) Representative: Houghton, Mark Phillip

(57) **Abstract**

An apparatus and method are provided for creating a virtual hole between a user's eye point and a cursor through a viewed three dimensional object. The user may select with the cursor an object on the other side of, or within, the three dimensional object without translating or rotating the three dimensional object.

## Description

### TECHNICAL FIELD

The exemplary embodiments described herein generally relate to two dimensional rendering of three dimensional images and more particularly to a viewable cursor for these displays.

### BACKGROUND

Three dimensional (3D) displays are becoming increasingly popular. Presently, many 3D displays implement stereoscopic techniques to generate a 3D visual display to a user. Such displays, which may be referred to as stereoscopic 3D displays, rely on the well known stereoscopic imaging technique for creating the illusion of depth in an image. As is generally known, stereoscopy is a method of creating a 3D image from a pair of two dimensional (2D) images, in which each of the 2D images preferably represents the same object or image from a slightly different perspective, such as a right eye perspective and a left eye perspective.

Stereoscopic display systems, which provide enhanced interpretation of the information by users over two dimensional displays and can result in improvements in performing various tasks as well as various other potential benefits, may be used for applications which rely on periods of extended concentration and/or critical information, such as avionics, medical, engineering/industrial or military applications, and may also be used for applications of shorter concentration periods, such as entertainment applications, for example, movies. Stereoscopic 3D displays have been conventionally directed toward intermittent and non-critical applications such as entertainment and modeling.

Some two dimensional displays render a three dimensional model that provides a sense of the objects in the third dimension, for example, by size and position indicating depth.

One issue with these display systems is the ability to select items, for example, displayed in the background. On a typical 2D display, a cursor can be moved to the point of interest, via mouse, track pad, or other device, and the point of interest being selected with a click of a button. On a display, with a cursor that can be moved in 3 dimensions, the cursor may be moved behind a portion of a view object, which results in the cursor being hidden. This hidden cursor is unusable and prevents the selection of an object that is obscured. One known system rotates and translates the viewed object so as to bring the desired feature into view. For complex objects, this might be difficult or impossible.

As the environment, such as aviation, in which these display systems are used becomes more complex, it is preferable that the operator be able to select information in a timely manner and with little stress (such as eye fatigue) to ensure proper operation. The user must interpret the information provided on the screen occupying his/her thought processes when he/she may have many other decisions to make.

Accordingly, it is desirable to provide a cursor that may be used to select objects in three dimensional displays without rotating the image. Furthermore, other desirable features and characteristics of the exemplary embodiments will become apparent from the subsequent detailed description and the appended claims, taken in conjunction with the accompanying drawings and the foregoing technical field and background.

### BRIEF SUMMARY

A system and method are provided for creating a virtual hole through a viewed object from the user's eye point to the desired position for the cursor.

A first exemplary embodiment is a method of selecting an object within a three dimensional image, comprising displaying the three dimensional image having a second object blocking the display of a first object; creating a virtual hole in the second object to display the first object within the virtual hole; and selecting the first object.

A second exemplary embodiment is a system for selecting a first object within a three dimensional image, the system comprising a display; a cursor control device configured to receive an input from a user; and a processor coupled to the display and the cursor control device and configured to instruct the display to display the three dimensional image including a second object blocking the display of the first object; create a virtual hole through the second object to display the first object within the virtual hole; and select the first object.

### BRIEF DESCRIPTION OF THE DRAWINGS

The present invention will hereinafter be described in conjunction with the following drawing figures, wherein like numerals denote like elements, and

FIG. 1 is a block diagram of a cursor control system in which the exemplary embodiments may be implemented;

FIG. 2 is a picture of a first three dimensional image;

FIG. 3 is a picture of the first three dimensional image in accordance with an exemplary embodiment;

FIG. 4 is a picture of a second three dimensional image;

FIG. 5 is a picture of the second three dimensional image in accordance with another exemplary embodiment; and

FIG. 6 is flow chart of the method in accordance with an exemplary embodiment.

### DETAILED DESCRIPTION

The following detailed description is merely illustrative in nature and is not intended to limit the embodiments of the subject matter or the application and uses of such embodiments. Any implementation described herein as exemplary is not necessarily to be construed as preferred or advantageous over other implementations. Furthermore, there is no intention to be bound by any expressed or implied theory presented in the preceding technical field, background, brief summary, or the following detailed description.

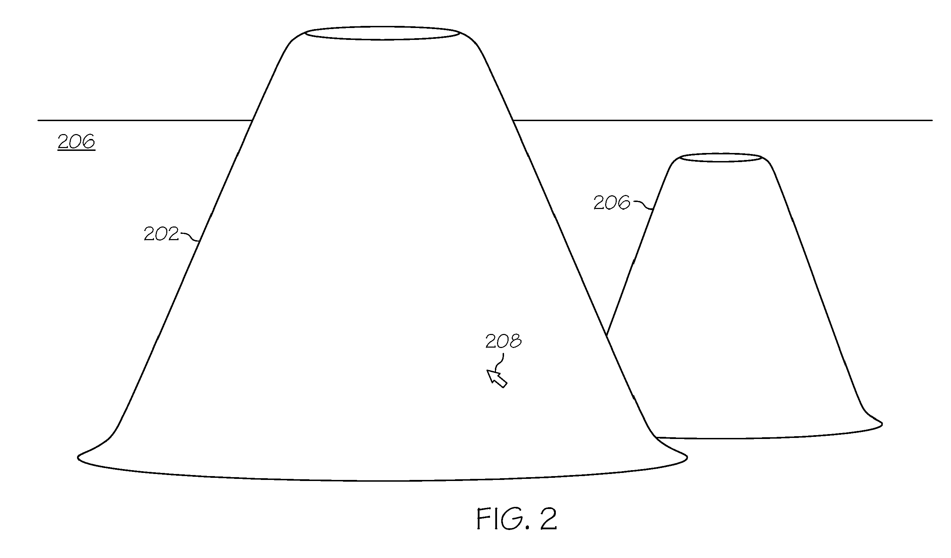

In accordance with the exemplary embodiments described herein, a virtual hole through a viewed object is created between the user's eye point and the desired position for the cursor. The object may be three dimensional, including stereoscopic, or it could be a two dimensional object in front of other two dimensional objects. For example, a two dimensional display (typical of most workstations) displays a two dimensional rendering of a three dimensional model that provides a sense of the objects in the third dimension (as shown in FIGS. 2-5). The user's eye point may be determined, for example, as a specific distance centered in front of the screen, or it may be actively determined by a sensor that determines the position of the user's eyes. In an example of a landscape, the virtual hole would appear as a tunnel allowing the user to see through the terrain, a hill for example, to an object on the other side of the terrain. The user may select with the cursor an object on the other side of the terrain without translating or rotating the image. In an example of a mechanical design or device, the virtual hole allows the user to select an item inside of the device.

The virtual hole may assume one of several exemplary embodiments for differentiating the virtual hole from the image being viewed. The virtual hole may be tinted (not entirely transparent) to define the virtual hole to prevent it from being mistaken as part of the model. The virtual hole may assume different sizes, up to and including the entire screen (the image to the level of the cursor is removed). The edge of the virtual hole may have, for example, a distinctive pattern including a soft edge (blurring), a subtle warping (as if the hole had been punched in the image), or a circle (solid or dotted). The virtual hole may assume different shapes, for example, a circle, an oval, or a rectangle.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

For the sake of brevity, conventional techniques related to graphics and image processing, aircraft data, and other functional aspects of certain systems and subsystems (and the individual operating components thereof) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

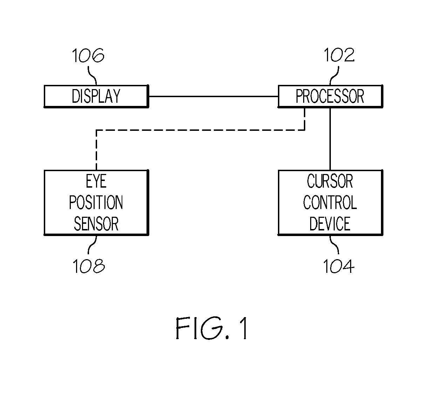

Referring to FIG. 1, a cursor control system 100 includes a processor 102 coupled between a cursor control device 104 and a display 106. The cursor control device may be a mouse, a track pad, or any other control device that controls the movement of a cursor on a display. A typical cursor control device includes a first mechanism, e.g., a ball, or laser, that senses movement, for moving the cursor in an X (across the screen) and Y (up and down the screen) direction, a second mechanism, e.g., a wheel, for moving the cursor in a Z (depth into the three dimensional image) direction, and a third mechanism, e.g., a button, for selecting a function in accordance with a position of the cursor in the three dimensional image.

The display 106 is configured to provide the enhanced images to the operator. In accordance with an exemplary embodiment, the display 106 may be implemented using any one of numerous known displays suitable for rendering textual, graphic, and/or iconic information in a format viewable by the operator. Non-limiting examples of such displays include various cathode ray tube (CRT) displays, and various flat panel displays such as various types of LCD (liquid crystal display) and TFT (thin film transistor) displays. The display 106 may additionally be implemented as a panel mounted display, a HUD (head-up display) projection, or any one of numerous known technologies. It is additionally noted that the display 106 may be configured as any one of numerous types of aircraft flight deck displays. For example, it may be configured as a multi-function display, a horizontal situation indicator, a vertical situation indicator, or a primary flight display (PFD).

The processor 102 may be implemented or realized with a general purpose processor, a content addressable memory, a digital signal processor, an application specific integrated circuit, a field programmable gate array, any suitable programmable logic device, discrete gate or transistor logic, discrete hardware components, or any combination designed to perform the functions described herein. A processor device may be realized as a microprocessor, a controller, a microcontroller, or a state machine. Moreover, a processor device may be implemented as a combination of computing devices, e.g., a combination of a digital signal processor and a microprocessor, a plurality of microprocessors, one or more microprocessors in conjunction with a digital signal processor core, or any other such configuration.

In the depicted embodiment, the processor 102 includes (not shown) on-board RAM (random access memory) and on-board ROM (read-only memory). The program instructions that control the processor 102 may be stored in either or both the RAM and the ROM. For example, the operating system software may be stored in the ROM, whereas various operating mode software routines and various operational parameters may be stored in the RAM. The software executing the exemplary embodiment is stored in either the ROM or the RAM. It will be appreciated that this is merely exemplary of one scheme for storing operating system software and software routines, and that various other storage schemes may be implemented.

No matter how the processor 102 is specifically implemented, it is in operable communication with the display 106, cursor control device 104, and optionally the eye position sensor 108. The processor 102 is configured to selectively retrieve data from one or more of the cursor control device 104 and the eye position sensor 108, and to supply appropriate display commands to the display devices 106. The display devices 106, in response to the display commands, selectively render various types of textual, graphic, and/or iconic information. Eye position is preferably measured by tracking head position and deriving eye position from the measurement. Head position may be determined by video analysis of a camera image. Head trackers may use one or more cameras in combination with sonars, lasers, or other sensors. For example, the Xbox kinect uses an IR laser to paint the scene with a grid. The cameras then capture the image of the person with the applied grid. Video analytics determine the user's position and motions from the camera images.

Though the method and system of the exemplary embodiments may be used in a non-mobile display, a CAD workstation for example, they may also be used in any type of mobile vehicle, for example, automobiles, ships, and heavy machinery. The use in an aircraft system is described as an example.

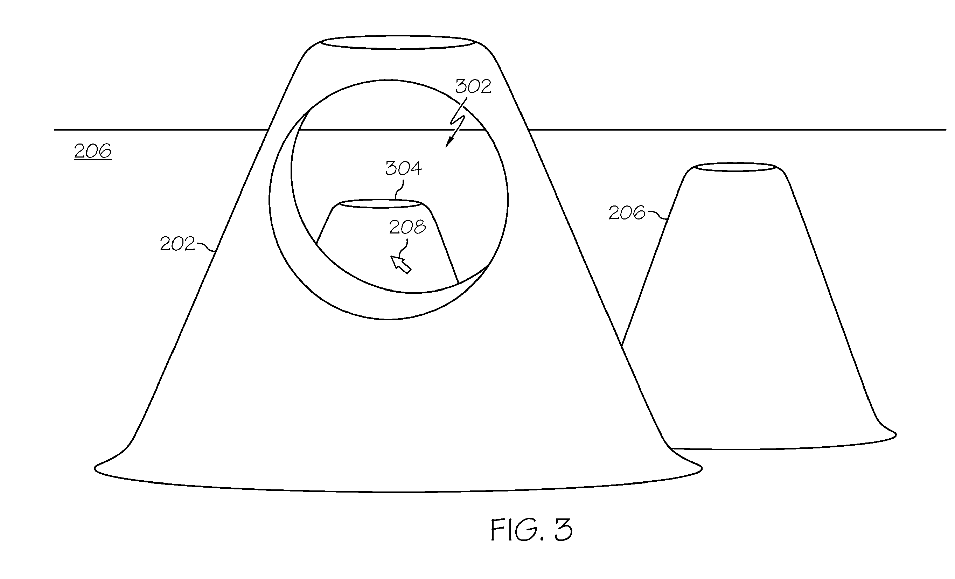

Referring to FIG. 2, one or more visible objects such as hills 202, 204 and terrain 206 in general are displayed. If an object were hidden behind one of the hills, for example, hill 202, it would not be visible, may not be known to the user, and could not be selected with the cursor 208. However, referring to FIG. 3, a virtual hole 302 is positioned through the hill 202, rendering the hill 304 visible. The system detects the far side of the hill 202 for determining the depth the virtual hole 302 needs to penetrate through the image (hill 202). The depth preferably would provide a virtual hole 302 through the entire hill 202. Alternatively, the hill 202 may be hidden (image removed) or made semi-transparent so hill 304 would be visible. The cursor 208 may then be moved in the X, Y, and Z plane to be positioned on the hill 304 for selection. As previously stated, an example of a cursor control device 104 would be a mouse having a ball or laser tracking movement in the X and Y direction, a wheel for moving the cursor 304 in the Z direction, and a button for performing the selection. In other words, if the cursor is in front of the displayed object, then no hole is visible and no special features are visible. As the user changes the depth (via the wheel for example), then the hole would start appearing through the display object (the depth of the hole being determined by the input to the wheel). When the virtual hole (Z dimension) penetrates the object, the hole is cleanly through the object wherein additional objects behind the displayed object may be viewed.

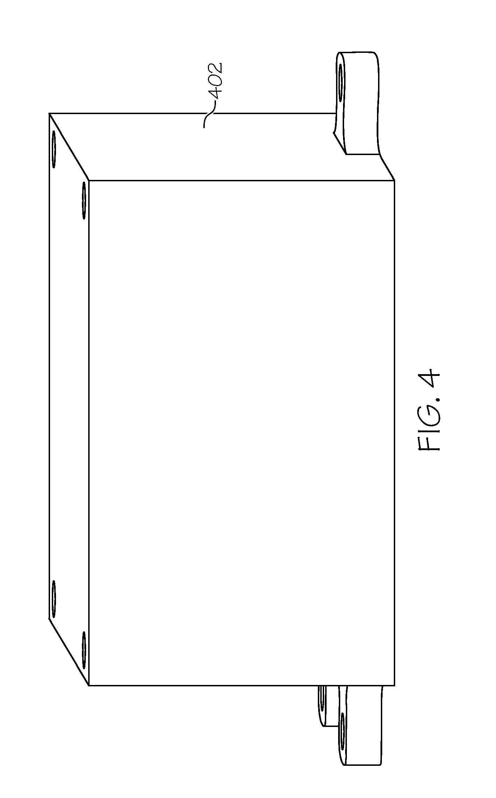

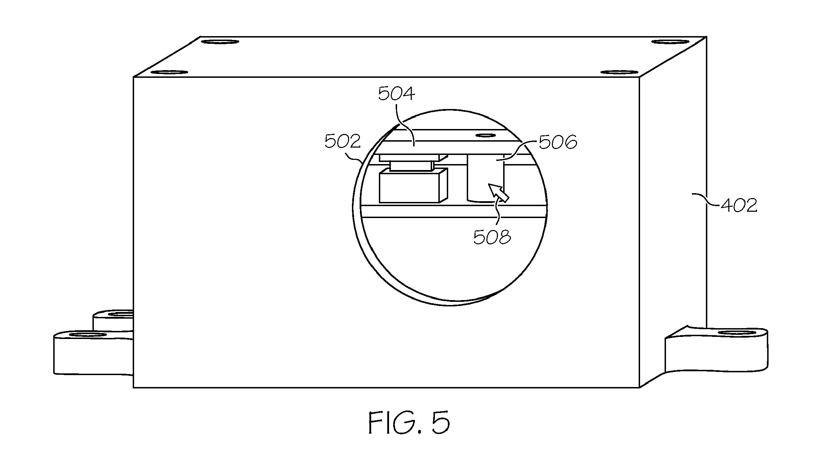

A second exemplary embodiment is described with reference to FIGS. 4 and 5. FIG. 5 presents a housing 402 for a mechanical device. The housing 402 obscures the viewing of any mechanical elements within the housing 402. However, referring to FIG. 5, the creation of a virtual hole 502 renders mechanical elements, such as frame 504 and support 506 visible. The cursor 508 may then be positioned appropriately in the X, Y, and Z plane for selection (of support 506 as shown). This method, by determining the depth of the virtual hole 502, allows for the viewing of any internal element or the internal wall of the housing 402 itself.

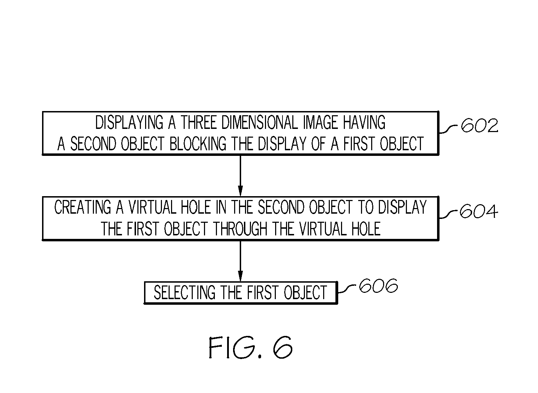

FIG. 6 is a flow chart that illustrates exemplary embodiments 600 of a method for creating a virtual hole through an object for the placement of a cursor on another object otherwise hidden from view by the object. The various tasks performed in connection with the embodiment 600 may be performed by software, hardware, firmware, or any combination thereof. For illustrative purposes, the following description may refer to elements mentioned above in connection with FIGS. 1-5. In practice, portions may be performed by different elements of the described system, e.g., a processor or a display element. It should be appreciated that the embodiment 600 may include any number of additional or alternative tasks, the tasks shown in FIGS. 6 need not be performed in the illustrated order, and the embodiment 600 may be incorporated into a more comprehensive procedure or process having additional functionality not described in detail herein. Moreover, one or more of the tasks shown in FIG. 6 could be omitted from the embodiment 600 as long as the intended overall functionality remains intact.

Referring to FIG. 6, an image is displayed 602 with an image having a first object blocking the display of a second object. A virtual hole is created 604 in the first object to display the second object through the virtual hole. The second object may then be selected 606 by placing the cursor on the second object.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention, it being understood that various changes may be made in the function and arrangement of elements described in an exemplary embodiment without departing from the scope of the invention as set forth in the appended claims.

## Claims

1. A method of selecting an object within a three dimensional image, comprising:
displaying the three dimensional image having a second object blocking the display of a first object;
creating a virtual hole in the second object to display the first object within the virtual hole; and
selecting the first object.

2. The method of claim 1 further comprising adjusting a depth of the virtual hole.

3. The method of claim 1 further comprising adjusting the outer dimension of the virtual hole.

4. The method of claim 1 further comprising selecting the shape of the virtual hole.

5. The method of claim 1 wherein creating comprises creating a semi-transparent virtual hole.

6. The method of claim 1 wherein the virtual hole defines an edge having a distinctive pattern.

7. The method of claim 1 wherein the first object is contiguous to but separate from the second object.

8. The method of claim 1 wherein the first object is within the second object.

9. The method of claim 1 wherein the second object is terrain.

10. The method of claim 1 further comprising:
sensing the position of a viewer's eyes; and
adjusting the angle of the virtual hole with regard to the image in response to the sensed position.

11. A system for selecting a first object within a three dimensional image, the system comprising:
a display;
a cursor control device configured to receive an input from a user; and
a processor coupled to the display and the cursor control device and configured to:
instruct the display to display the three dimensional image including a second object blocking the display of the first object;
create a virtual hole through the second object to display the first object within the virtual hole; and
select the first object.

12. The system of claim 11 wherein the processor is further configured to adjust a depth of the virtual hole.

13. The system of claim 11 wherein the first object is within the second object.

14. The system of claim 11 wherein the second object is terrain.

15. The system of claim 11 wherein the processor is further configured to:
sense the position of a viewer's eyes; and
adjust the angle of the virtual hole with regard to the image in response to the sensed position.
